(19) Europäisches Patentamt

European Patent Office

Office européen des brevets

(11) **EP 0 883 510 B1**

(12) **EUROPÄISCHE PATENTSCHRIFT**

(45) Veröffentlichungstag und Bekanntmachung des Hinweises auf die Patenterteilung:
**11.07.2001 Patentblatt 2001/28**

(21) Anmeldenummer: **97949878.9**

(22) Anmeldetag: **07.11.1997**

(51) Int Cl.⁷: **B60K 41/28**

(86) Internationale Anmeldenummer:
**PCT/DE97/02598**

(87) Internationale Veröffentlichungsnummer:
**WO 98/22304 (28.05.1998 Gazette 1998/21)**

(54) **ANTRIEBSSTRANGSTEUERUNG FÜR EIN KRAFTFAHRZEUG**

DRIVE-TRAIN CONTROL FOR A MOTOR VEHICLE

COMMANDE DE TRANSMISSION POUR UN VEHICULE AUTOMOBILE

(84) Benannte Vertragsstaaten:
**DE FR GB**

(30) Priorität: **20.11.1996 DE 19648055**

(43) Veröffentlichungstag der Anmeldung:
**16.12.1998 Patentblatt 1998/51**

(73) Patentinhaber: **SIEMENS AKTIENGESELLSCHAFT 80333 München (DE)**

(72) Erfinder:
• **GRAF, Friedrich D-93049 Regensburg (DE)**
• **PROBST, Gregor D-84028 Landshut (DE)**

(56) Entgegenhaltungen:
**DE-A- 4 039 517      DE-A- 19 637 210**
**US-A- 5 021 959      US-A- 5 410 477**
**US-A- 5 611 310**

**Beschreibung**

Die Erfindung betrifft eine Antriebsstrangsteuerung gemäß Anspruch 1.

Bekannte Steuerungssysteme für den Motor, das Getriebe und die Nebenaggregate eines Kraftfahrzeugs arbeiten weitgehend selbständig, d. h. sie stellen den Arbeitspunkt und den Betriebsmodus des gesteuerten Aggregats weitgehend unabhängig voneinander ein. Es stehen auch Mittel zur Kommunikation zwischen den einzelnen Bestandteilen des Antriebsstrangs eines Kraftfahrzeugs zur Verfügung, z. B. in Form eines CAN-Busses oder ähnlichem, diese werden aber überwiegend nur zum Austausch von Sensordaten im Wege einer Mehrfachausnutzung verwendet. Außerdem beeinflussen sich die Steuerungen mittels Kommunikation bei bestimmten Vorgängen, z. B. um den Schaltkomfort durch eine Reduktion des Motormoments bei einem Übersetzungswechsel des Getriebes zu verbessern.

Weitere Beispiele sind eine Motorschleppmomentregelung beim Bremsen und ein Bremseingriff oder eine Motormomentreduktion bei auftretendem Antriebsschlupf. Bekannt ist ein Vorschlag zur Systemvernetzung im Automobil, die eine integrierte Antriebsstrangsteuerung für ein Kraftfahrzeug anstrebt, durch die die Stellung des Gaspedals als ein vom Fahrer gewünschtes Radmoment interpretiert und zum Berechnen von Sollwerten für den Motor und für das Getriebe des Kraftfahrzeugs verwendet (F & M 101(1993)3, Seiten 87 bis 90). Zielsetzung der darin vorgeschlagenen übergeordneten Optimierung der Teilsysteme Motorsteuerung, elektronisches Gaspedal und Getriebesteuerung ist es, den Kraftstoffverbrauch zu reduzieren und die Fahrbarkeit des Kraftfahrzeugs zu verbessern, insbesondere was die spontane Reaktion auf Gaspedalbewegungen betrifft.

Bei einer Antriebsstrangsteuerung gemäß einer älteren Anmeldung DE-A-19637210 (veröffentlicht am 19.3.1998) ist die zentrale Führungsgröße ein Soll-Radmoment, das der Fahrer festlegt durch eine bestimmte Fahrpedalstellung (stationär), aber auch eine gewisse Fahrpedaldynamik, d.h. durch die Art und Geschwindigkeit von Änderungen der Fahrpedalstellung.

Der Erfindung liegt die Aufgabe zugrunde, eine Antriebsstransteuerung zu schaffen, bei der eine von dem Fahrer eines Kraftfahrzeugs vorgegebene Fahrpedalstellung in ein auf die Fahrbahn zu übertragendes Soll-Raddrehmoment umgesetzt wird. Dieses kann sowohl für eines der angetriebenen Räder einzeln oder als Summe für alle angetriebenen Räder ermittelt werden.

Die Steuerung des Antriebsstranges durch Vorgabe eines Soll-Raddrehmomentes (oder kurz: Sollradmoment) bietet grundsätzlich den Vorteil, daß sowohl der Motor- als auch der Betriebspunkt des Getriebes nicht direkt vorgegeben sind, sondern sich nach vorgegebenen Kriterien frei kombinieren lassen. Es ist nur die Bedingung, daß Mrad, soll = Mmot,soll (k)*iG(k) zu beachten, wobei $M_{mot,soll}$ (k) = Soll-Motordrehmoment bei einer Kombination k und iG (k) = Getriebeübersetzung bei der Kombination k sind.

Ein weiterer Vorteil der Erfindung ist, daß es mit ihr gelingt, den Betrieb eines Kraftfahrzeugs global zu verbessern. Es wird eine Strategie für die Motorsteuerung, die Motorleistungsstelleinheit und die Getriebesteuerung zentral derart festgelegt, daß der Ausstoß von Schadstoffen (Kohlenwasserstoffe, Stickoxide usw.), insbesondere im Stadtgebiet, minimiert wird. Die zentrale Strategie kann auch einen fahrleistungsorientierten Modus des Kraftfahrzeugs zum Ziel haben. Alle dezentralen Funktionseinheiten werden bei dieser Strategie so eingestellt, daß eine bestmögliche Beschleunigung, ein schnelles Ansprechen des Antriebs auf den Fahrerwunsch zur Verfügung stehen. Notwendig ist ein solcher Modus bei einer sportlichen Fahrweise und bei Bergauffahrt.

Ausführungsbeispiele der Erfindung werden nachfolgend anhand der Zeichnung erläutert. Es zeigen:

Figur 1      eine integrierte Antriebsstrangsteuerung gemäß der Erfindung;

Figur 2      eine in der Antriebsstrangsteuerung nach Figur 1 verwendete Fuzzy-Regelbasis;

Figur 3      einige Bestandteile der Antriebsstransteuerung nach Figur 1, einschließlich einer Skalierungseinrichtung,

Figur 4      ein Diagramm zur Erläuterung der Wirkungsweise der Skalierungseinrichtung nach Figur 3;

Figur 5      ein Ablaufdiagramm des von der Antriebsstrangsteuerung nach Figur 1 abgearbeiteten Programms, und

Figur 6      ein Schaltungsblock der Antriebsstransteuerung nach Figur 1 im Detail.

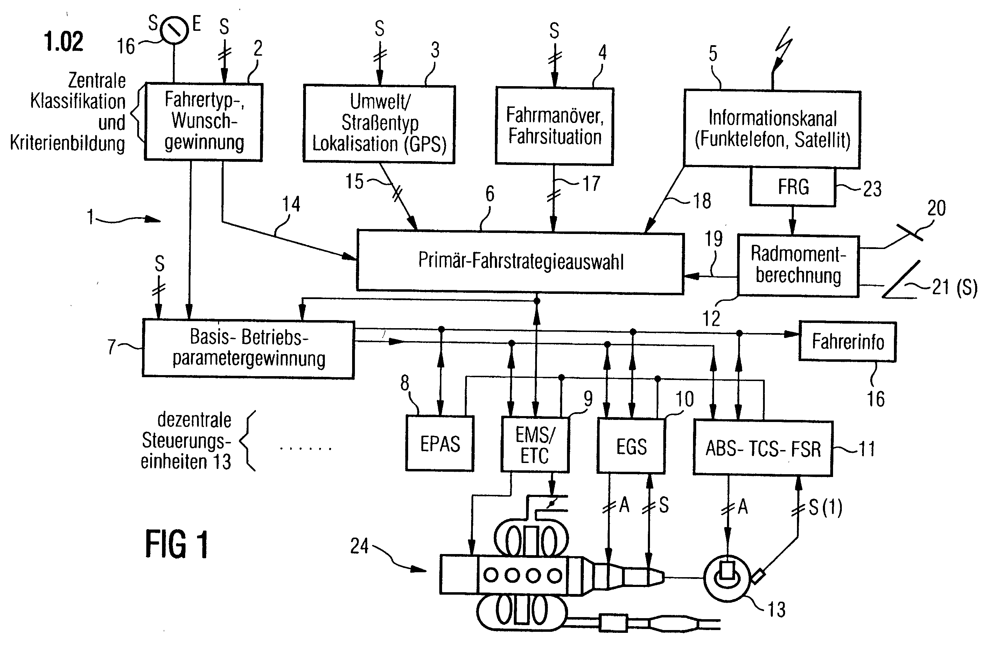

Eine integrierte Antriebsstrangsteuerung 1 weist die nachfolgend aufgeführten Bestandteile auf (Figur 1). Der besseren Lesbarkeit halber wird im folgenden bei den einzelnen Schaltungs- oder Programmbestandteilen häufig auf die Bezeichnungen "-Schaltung" oder "Block" verzichtet (Beispiel: Auswahl statt Auswahlschaltung):

Eine zentrale Klassifikation und Kriterienbildung 1.02, mit einer Fahrertyp- und Fahrerwunsch-Gewinnung(sschaltung) 2, eine Umwelt- und Straßentyp-Lokalisation 3 (zum Beispiel über GPS), eine Fahrmanöver- und Fahrsituationserkennung 4 und ein Informationskanal 5 (zum Beispiel ein Funktelefon oder ein Satellitenempfänger). Den Schaltungen 2 bis 5 und weiteren noch zu beschreibenden Schaltungsbestandteilen der Antriebsstrangsteuerung 1 werden die Signale von verschiedenen Sensoren im Kraftfahrzeug, die hier symbolisch mit S bezeichnet sind, über entsprechende Signalleitungen zugeführt. Die Signalleitungen sind in der Zeichnung als Mehrfachleitungen angedeutet, sie können auch als Datenbus ausgeführt sein. '

Eine Steuerschaltung 6, die eine Prlmär-Fahrstragleauswahl durchführt und deshalb auch als Primär-Fahrstrategieauswahl bezeichnet wird, empfängt über Leitungen 14 bis 18 Ausgangssignale der vorstehend erwähnten Schaltungen 2 bis 5. Über eine Leitung 19 empfängt sie das Ausgangssignal einer Radmomentberechnung 12, die ihrerseits Signale von einem Bremspedal 20 und einem Gaspedal 21 empfängt.

Block 12 führt nun eine dynamische Beeinflussung des Signals auf Leitung 19 durch. Es ist nämlich nicht nur entscheidend, welche Einflußgrößen das Soll-Radmoment beeinflussen, sondern auch wie schnell der Radmomentaufbau oder -abbau geschieht. Dabei können konventionelle Filter (zum Beispiel 1.Ordnung) eingesetzt werden, deren Zeitkonstanten durch die äußeren Einflußgrößen festgelegt werden und somit die Signaldynamik auf Leitung 10 beeinflussen. Auch ist es vorteilhaft, das Sollradmoment bei bestimmten Vorgängen konstant zu halten oder gemäß einer vorgegebenen zeitabhängigen Funktion an einen aktuellen Wert aus Block 5 anzunähern (auch nach einer Phase des Konstanthaltens, zum Beispiel bei einem Gangwechsel). Damit wird der Eindruck vermieden, daß das Fahrzeug selbständig, d.h. ohne Zutun des Fahrers, beschleunigt.

Ausgangssignale der Steuerschaltung 6 werden einer Basis-Betriebsparametergewinnung 7 und einer elektronischen Motorsteuerung und Motorleistungsstelleinheit 9 zugeführt. Ausgangssignale der Basis-Betriebsparametergewinnung 7 gelangen zu einer Fahrerinformation oder Anzeige 16, zu einer elektrischen Servolenkung (EPAS) 8, zu einer elektronischen Motorsteuerung und Motorleistungsstelleinheit (EMS/ ETC) 9, zu einer elektronischen Getriebesteuerung (EGS) 10 und zu einer Bremssteuerung 11, die ein ABS-System, eine Antriebsschlupfregelung TCS und eine Fahrstabilitätsregelung FSR einschließen kann.

Die Basis-Betriebsparametergewinnung (oder Block) 7 führt nun gemäß der Strategievorgabe aus dem Block 6 eine koordinierte Berechnung der zentralen Betriebsparameter des gesamten Antriebsstranges durch. Im Block 7 werden zum Beispiel Getriebeübersetzungen und Soll- Motordrehmoment festgelegt, aber auch Antriebsart und deren einzelne Betriebspunkte bei einem Hybridantrieb. Dies ermöglicht eine wesentlich umfassendere Steuerung von Motor und Getriebe als bisher. So kann das Motordrehmoment abhängig von der Getriebeübersetzung eingestellt werden. Dies erhöht die Fahrbarkeit des Kraftfahrzeugs, da der Fahrer bei einer Hochschaltung den Verlust an Abtriebsmoment nicht mehr ausregeln muß. Aber auch Schadstoffemissionen können so wirksam gesenkt werden (Erklärung folgt weiter unten).

Die koordinierte Festlegung der Betriebsparameter von Motor und Getriebe erfolgt dabei nicht nur stationär, d.h. nicht nur bei konstanter Radmomentanforderung aus Block 12, sondern es werden auch Informationen über dynamische Vorgänge wie z.B. über eine Kurvenfahrt oder über einen Übergang in den Schubbetrieb (Fahrzeuggeschwindigkeit wird dabei verkleinert) von Block 7 berücksichtigt, um die nachgeordneten Funktionseinheiten 8-11 zu koordinieren. So ist es im Fall des Schubbetriebs möglich, sowohl die aktuelle Gangübersetzung festzuhalten als auch gleichzeitig die Schubabschaltung zu aktivieren. Bei einer extremen Kurvenfahrt ist es zum Erhalt der Fahrstabilität sinnvoll, die Übersetzung zu fixieren (-> EGS) und Lastwechsel im Antrieb zu dämpfen oder langsamer ablaufen zu lassen (-> EMS/ETC).

Die Zentralisierung im Sinne von Fahrbarkeits- und Emissionsmanagement soll aber nur soweit erfolgen wie nötig (Strategievorgabe oder -Delegation). Alle anderen Funktionen laufen in der Ebene der dezentralen Steuerungseinheiten soweit möglich selbständig ab (z.B. Funktionen für Fahrstabilität)

Die Steuerschaltungen oder Geräte 8 bis 11 erzeugen Stellsignale, mit denen die einzelnen Aggregate oder Bestandteile des Antriebsstrangs 24 des Kraftfahrzeugs gesteuert werden, d.h. der Motor über seine Drosselklappe, das Getriebe und die Bremsen des Kraftfahrzeugs. Die Stellsignale gelangen über Leitungen A von den Schaltungen 9 bis 11 zu den Aggregaten des Antriebsstrangs 24, Sensorsignale S werden über entsprechende Leitungen den genannten Schaltungen zugeführt. Die Steuerschaltungen oder Geräte 8 bis 11 können allerdings auch als sogenannte Vororteinheiten mit dem jeweils zu steuernden Aggregat zusammengebaut oder in dieses integriert sein. So ist es zum Beispiel sinnvoll, die Steuerung 11 im Falle eines elektrischen Bremsaktuators mit dem Bremsaktuator zusammenzufassen. An der Steuerungsfunktion ändert sich dadurch nichts.

Die einzelnen Bestandteile des Antriebsstrangs 24 selbst sind in Figur 1 unten zeichnerisch dargestellt, sie werden hier nicht weiter erläutert, da sie allgemein bekannt sind. Im Falle eines Hybridantriebes - d.h. eines Verbrennungsmotors kombiniert mit einem Elektromotor - ist ersterer mit dem Elektromotor und einem Generator G gekoppelt. Ein solcher Hybridantrieb ist zum Beispiel aus VDI-Bericht Nr. 1225, 1995, Seiten 281-297 bekannt.

Die Funktionen einer erfindungsgemäßen globalen oder kombinierten Antriebsstrangsteuerung sind in erster Linie folgende:

Ein emissionsminimierter Betrieb (HC, NOx):

- Die Steuerschaltung 6 legt die Betriebsweise des gesamten Antriebstrangs auf minimierten Schadstoffausstoß fest.

- Ein zentraler "Entscheider", d.h. die Steuerschaltung 6, berechnet gemäß dieser Vorgabe die wesentlichen Betriebsparameter der Schaltungen 9, 10 (EMS, ETC, EGS) derart, daß der Ausstoß an Schadstoffen minimiert wird (z.B. im Stadtgebiet). Diese Vorgabe kann von den nachgeordneten Funktionseinheiten folgendermaßen umgesetzt werden:

-- ETC (elektronische Motorleistungssteuerung): Lastwechsel des Verbrennungsmotors werden gedämpft (angefordert von Einheit 12) oder der Betriebsbereich wird eingeschränkt. Durch Vermeiden von instationären Vorgängen können dabei Regelungen und Steuerungen, die eine Emissionsreduktion bezwecken, fehlerfrei Arbeiten. Betriebsbereiche mit quantitativ oder qualitativ unerwünschter Zusammensetzung der Emissionen werden vermieden.

-- EMS (elektronische Motorsteuerung): Aktivierung eines emissionsarmen Modus, z.B. bei Verbrennungsmotor Verringerung der Beschleunigungsanreicherung, oder - Wechsel der Antriebsart (z.B. auf Elektromotor, Wasserstoffantrieb)

-- EGS (elektronische Getriebesteuerung): bewirkt beim Verbrennungsmotor einen möglichst stationären Betrieb im Bereich mit kleinster Emission, zum Beispiel mit CVT oder vielstufigem Getriebe;

- Anpassung bei Wechsel der Antriebsart (z.B. Elektromotor, Wasserstoffantrieb, und zwar koordiniert durch die Einheit 7). Besonders bei dieser Funktion kommt es auf ein gutes Zusammenspiel von Motor und Getriebe an, denn die Anforderung des Fahrers läßt bezüglich Beschleunigung und Geschwindigkeit mehrere Kombinationen von resultierendem Motordrehmoment und Getriebeübersetzung zu. Auch ist ein abgestimmter Verlauf der zeitlichen Änderung beider Stellgrößen notwendig.

Ein fahrleistungsorientierte Modus:

Analog zum emissionsminimierten Betrieb werden alle dezentralen Funktionseinheiten so eingestellt, daß bestmögliche Beschleunigung, schnelles Ansprechen des Antriebs auf den Fahrerwunsch (uneingeschränkte Antriebsart) zur Verfügung stehen. Notwendig bei sportlicher Fahrweise oder Bergauffahrt.

Aus Figur 1 ist die Architektur einer solchen Funktionsteilung ersichtlich. Allerdings werden Entscheidungen tieferer Kontrollebenen, die übergeordnete Vorgaben beeinflussen, an die höheren Kontrollebenen sofern notwendig signalisiert. Dies wird aber nachfolgend im einzelnen erläutert.

Der Block (oder Schaltung) 2 dient der Fahrertypgewinnung, d.h. eine Klassifikation zwischen fahrleistungsorientiert und ökonomisch. Ein Beispiel für eine derartige Funktion ist in EP 0 576 703 A1 beschrieben. Ein den Fahrstil des Fahrers charakterisierendes Signal wird der Prlmär-Fahrstrategieauswahl 6 über eine Leitung 14 zugeführt.

Der Block 3 ermittelt den Straßentyp (Stadt/ Autobahn/Landstraße), kann aber auch über zusätzliche Sensoren z.B. den allgemeinen Grad der Luftverunreinigung feststellen. Ist mit GPS (Global Positioning System) in Verbindung mit einer digitalen Karte (auf CD-Rom) der lokale Standort des Fahrzeugs bekannt, so kann diese Information über die lokale Luftverunreinigung dem Block 6 zur Verfügung gestellt werden.

Eine in dem Block 4 durchgeführte Detektion einzelner Fahrmanöver, wie z.B. Kurvenfahrt, Fahrbahnsteigung, Antriebs-Bremsschlupf, sowie eine Information über Längs- und Querstabilität, kann ebenfalls zur Ermittlung der Fahrstrategieauswahl herangezogen werden. Diese Informationen können auch Block 7 zur Verfügung gestellt werden, um über die mittelfristige Betriebsstrategie auch kurzfristig eine geeignete Betriebsweise des Antriebsstrangs zu erreichen. Dabei können diese Informationen für die Blöcke 6 und 7 auch von dezentralen Steuerungseinheiten stammen (z.B. über die fahrdynamische Stabilität von dem ABS/TCS/FSR-Steuergerät 11) oder von dem Informationskanal 5. Dieser Block 5 stellt Informationen zur Verfügung, die von einer zentralen "Leitstelle", zum Beispiel von einer Verkehrsüberwachungsbehörde, gegeben werden. So ist es möglich, in einer Region zentral eine emissionsarme Betriebsweise zu steuern.

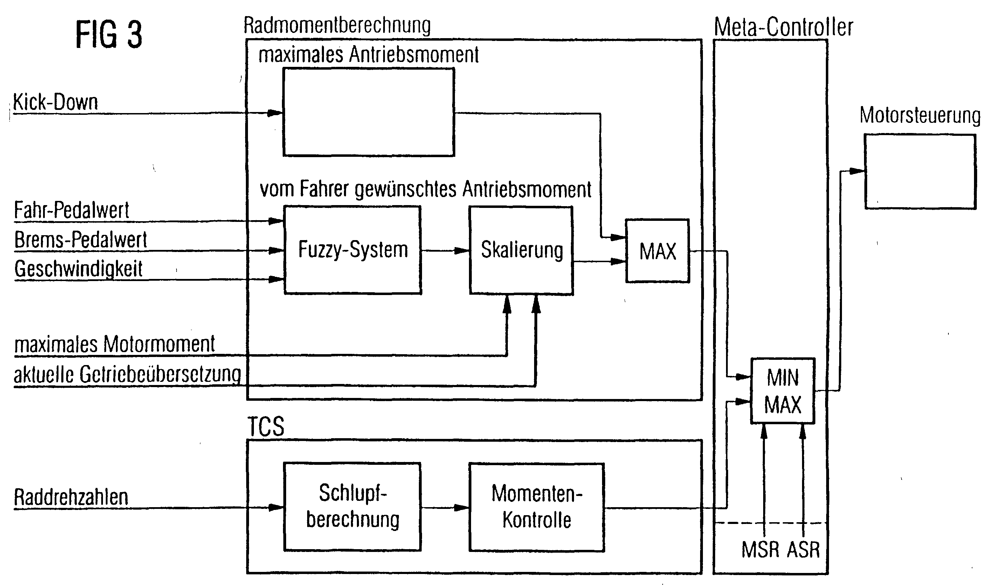

Der Block 6 dient der Ermittlung der primären Fahrstrategieauswahl für die nachgeordnete Einheit 7, die wiederum die zentralen Betriebsparameter für die dezentralen Steuerungseinheiten koordiniert ermittelt. Die Informationen auf den Leitungen 14, 15, 17 und 18 werden mit einem festgelegten Regelsatz, insbesondere mit einer Regelbasis eines Fuzzy-Logik-Systems, verarbeitet. Möglich ist auch eine Auswertung mit mathematisch formulierte Algorithmen oder mit einem neuronalen Netz. (Weitere Einzelheiten der Blökke 6, 9, 11 und 12 werden anhand von Figur 3 erläutert.)

Die Sensoren S liefern notwendige Signale sowohl für die Bildung der Klassifikation und der Kriterien in der obersten Schicht der Antriebsstrangsteuerung 1, d.h. in den Einheiten 2 - 5, als auch an die dezentralen Steuerungseinheiten für die einzelnen Aggregate. Die Lokalisierung der Sensoren bezüglich der Funktionsblöcke spielt eine untergeordnete Rolle, sofern eine Kommunikation zwischen der Sensorsignalaufbereitung in der jeweiligen Steuereinheit (ECU) und der Informationssenke gewährleistet ist. Auch ist es bezüglich der Funktionsarchitektur unwesentlich, in welcher ECU welche Funktionseinheiten physikalisch vorhanden und zusammengefaßt sind. So ist es durchaus möglich, die Fahrertyp- und Fahrerwunschgewinnung in die Getriebesteuerung (EGS) 10 zu integrieren, während Umwelt- und Straßentypklassifikation in dem Block 11 (Längs- und Querdynamikregelung) untergebracht werden können.

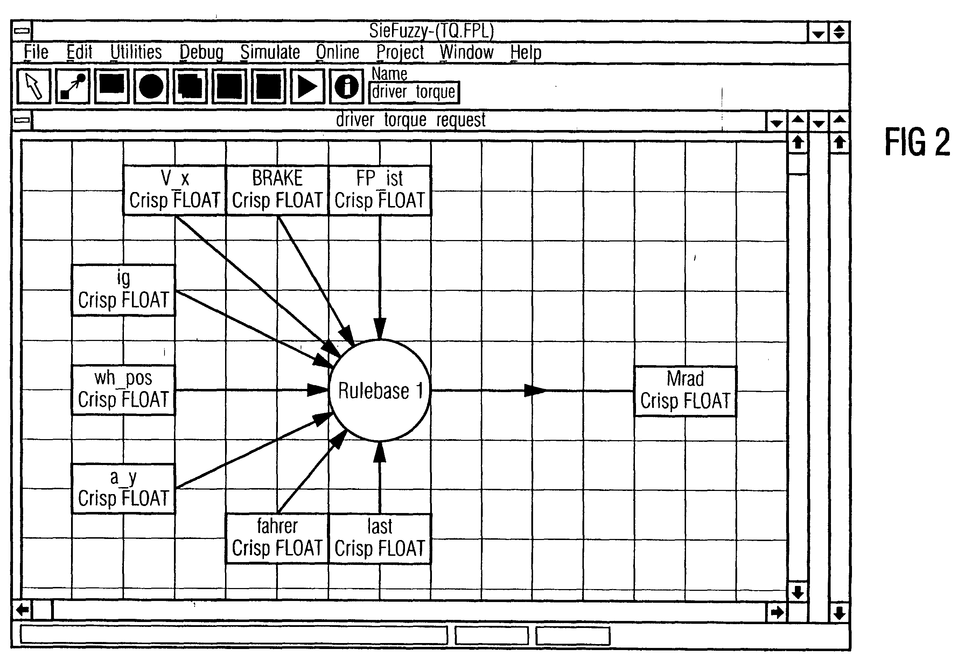

Auch kann ein zentraler Rechner die Einheiten 12, 6, 7 mit enthalten. Wesentlich ist die virtuelle Architektur, wie sie in Figur 2 dargestellt ist, um eine insgesamt verbesserte Funktion zu erreichen. Eine wichtige Rolle spielt dabei die Kommunikation zwischen den physikalischen Einheiten, die zweckmäßigerweise als schnelle serielle Buskommunikation (zum Beispiel über einen CAN-Bus) ausgeführt ist.

Die Vorgaben des Fahrers durch das Gaspedal werden in dem Block 12 in eine Soll-Raddrehmomentvorgabe umgesetzt, d.h. in das Drehmoment, das von den Antriebsrädern auf die Fahrbahn zu übertragen ist. Der Einfluß von umweltbedingten Einflüssen wie zusätzlichen Fahrwiderständen (Bergfahrt, Beladung) soll hier nicht berücksichtigt werden, um den Fahrer nicht von der physikalischen Realität zu entfremden.

Der Block 12 ist in Figur 1 gesondert dargestellt, er kann aber auch in den dezentralen Steuerungseinheiten 8-11 oder 16 physikalisch untergebracht sein (z.B. EMS/ETC). Gleiches gilt für die Blöcke 1-7. Das Signal auf der Leitung 19 kann als Wunsch-Radmoment ausgegeben werden oder auch als Soll-Radumfangskraft oder Soll-Getriebeausgangsdrehmoment. Dabei ist es durch eine kontinuierliche Information über das Bremspedal 20 auch möglich, negative Soll-Radmomente oder -Umfangskräfte vorzugeben. Somit ist ein integriertes Management von antreibenden Einheiten (z.B. Verbrennungs-, Elektromotor, rotierendes Schwungrad) oder verzögernden, Energie aufnehmenden Einheiten (z.B. Betriebsbremse, Stromgenerator, ruhendes Schwungrad) möglich. Alternativ zur Radmomentvorgabe vom Fahrer kann dieses auch von einem Fahrgeschwindigkeitsregler 23 (kurz FGR) vorgegeben werden.

Die Informationskanäle zwischen dem Block 7 "Basis-Betriebsparametergewinnung" und den Einheiten 9, 10 und 11 sind bidirektional nutzbar. Der Grund hierfür ist die Notwendigkeit, bei der Berechnung der Basis-Betriebsparameter nicht nur externe Bedingungen wie Fahrertyp, Umwelt und Fahrmanöver zugrunde zu legen, sondern auch interne vorgegebene Betriebszustände der gesteuerten Einheiten im Antrieb zu berücksichtigen. So ist es wichtig, nach dem Kaltstart den Verbrennungsmotor bei erhöhten Drehzahlen zu betreiben, um damit das Aufheizen des Katalysators zu unterstützen. Zudem stellen zusätzliche Heizquellen (z.B. ein elektrisch beheizter Katalysator) eine zusätzliche Last am Motorantrieb dar. Eine Spätverstellung der Zündung nach dem Kaltstart (unter Umständen ein Einblasen von Sekundärluft) zum gleichen Zweck verändert die Charakteristik des Antriebs, was von Einheit 7 berücksichtigt werden muß (z.B. durch Verschieben von Schaltpunkten zu höheren Motordrehzahlen).

Ebenso kann ein bestimmter Betriebszustand im Getriebe die Berechnung der Übersetzung des Getriebes beeinflussen (z.B. kaltes Getriebeöl beim Zuschalten der Wandlerüberbrückung; bei Getriebeübertemperatur ist ein Verschieben der Motordrehzahlen in Bereiche, die den Volumendurchsatz der Ölpumpe des Getriebes durch den Ölkühler erhöhen, sinnvoll). Andere auf das Motordrehmoment erfolgende Eingriffe, wie z.B. eine Erhöhung, um den Drehmomentverlust durch den Klimakompressor oder Wirkungsgradverluste des Getriebes (CVT: Verstellung der Übersetzung bedingt größere Pumpenleistung) auszugleichen, finden auf der Steuerungsebene repräsentiert durch die Blocke 8-11 statt, sofern sie nicht auch durch Maßnahmen in Block 7 unterstützt werden müssen.

Durch die erfindungsgemäße Antriebsstrangsteuerung ist es so möglich, daß nicht nur das Schaltverhalten bei Bergauf und -abfahrt oder bei fahrstil- und fahrsituationsbezogener Fahrleistungsanforderung, sondern die Steuerung des gesamten Antriebsstranges einschließlich Antriebsquellen anderen Kriterien unterliegt und an diese angepaßt wird.

So kann es sinnvoll und notwendig sein, in kritischen Situationen und Fahrmanövern die aktuelle Übersetzung situationsbezogen anzupassen (festzuhalten), und zwar unabhängig von der gerade etablierten generellen Strategie. Solche dynamischen Korrekturen werden in dem erfindungsgemäßen Steuerungskonzept mit der Steuerung des Motors funktional kombiniert (ein Beispiel ist das koordinierte Gangfesthalten und Aktivieren der Motorschubabschaltung).

Es ist sinnvoll, in dem Block 12 (Radmomentberechnung) noch keine motorspezifischen Parameter einzubeziehen, da ja zum Beispiel bei einem Hybridantrieb die Wahl der Antriebsart auf dieser Entscheidungsebene noch nicht feststeht. Allerdings ist es nützlich, Bedingungen wie Traktionsverhältnisse (Winterbetrieb, Split-Untergrund) einzubeziehen und vor allem bei stark motorisierten Fahrzeugen präventiv die Empfindlichkeit des Systems etwas zu reduzieren (bei gleichem Fahrpedal weniger Radmoment erzeugen). Allgemein kann die Umsetzung der Fahrpedalstellung in ein Radmoment mit einen Fuzzy-System erfolgen, das die mehrfachen Abhängigkeiten zu einem Soll-Radmoment kombiniert.

Die Vorteile der Erfindung liegen auch in einem integrierten Radmomentmanagement, das das Radmoment auch als negativen Wert verarbeitet und sowohl Antriebsquellen als auch das Fahrzeug verzögernde Einheiten beeinflußt. Besonders einfach ist dabei eine Kopplung mit Bremssystemen mit elektrischer Bremsenbetätigung ("Brake by wire").

Im dem Block 7 werden nicht nur die Getriebeübersetzungen und das jeweilige Soll-Motordrehmoment, sondern auch die Antriebsart und deren einzelne Betriebspunkte festgelegt. Dabei ist nicht nur ein streng radmomentorientierter Betrieb nach Fahrervorgabe möglich, sondern es kann auch durch zentrale Vorgaben bezüglich der Schadstoffemission das reale Radmoment beeinflußt oder begrenzt werden. Allerdings müssen solche Eingriffe dem Fahrer durch den Block 16 angezeigt werden und möglichst ohne Restriktionen der Fahrbarkeit erfolgen.

Die Blöcke 2 bis 7, 12 und 16 können in eigenständigen physikalischen Einheiten (Steuergeräten) untergebracht oder in die Einheiten 8-11 integriert sein. Ein weiterer Vorteil der Erfindung ist diese Flexibilität.

Der Datenaustausch zwischen den einzelnen Steuergeräten erfolgt momentenbasiert. Unter "momentenbasiert" ist folgendes zu verstehen: Wird zum Beispiel vom Getriebe eine Motormomentreduktion angefordert, dann übermittelt es eine Größe an die Motorsteuerung, die das Wunschmoment, d.h. das gewünschte Motordrehmoment, darstellt und nicht z.B. eine Zündwinkelreduktion um 5% fordert. Umgekehrt wird zur Ermittlung des Motormomentes in dem aktuellen Arbeitspunkt zum Beispiel der Getriebesteuerung nicht die Drosselklappenstellung und die Motordrehzahl übertragen, aus denen die Getriebesteuerung über eine in der Getriebesteuerung abgelegten Matrix das aktuelle Motormoment ermitteln könnte, sondern die Motorsteuerung überträgt über eine Schnittstelle (z.B. CAN) das aktuelle Motormoment an die Getriebesteuerung.

Fuzzy-Logik ist eine besonders vorteilhafte Methode, um multikriteriell das auf der Leitung 19 auszugebende Radmoment-Signal (stationär) $M_{rad\_soll,stat}$ zu berechnen. Mit der herkömmlichen Kennfeldmethode sind nur max. dreidimensionale Zusammenhänge darstellbar, diese Begrenzung wird mit Fuzzy-Logik überwunden. Es können sowohl verschiedene Prämissen in eine Regel integriert werden, die mit UND (oder ODER) verknüpft werden. Nach den Verfahren der Unscharfen Logik oder Fuzzy-Logik werden Zwischenwerte erzeugt, wenn diese Prämissen nicht vollständig erfüllt sind. Somit lassen sich ähnlich der Kennfeldinterpolation Zwischenwerte erzeugen. Darüber hinaus können mehrere Regeln gleichzeitig das Endergebnis beeinflussen (Inferenz) in der Weise, daß das Gesamtergebnis verringert oder vergrößert wird (zum Beispiel mittels Schwerpunktmethode zur Defuzzifizierung).

Ein Ausführungsbeispiel einer Fuzzy-Regelbasis ist aus Figur 2 ersichtlich; sie ist auf dem Bildschirm eines Entwicklungssystems dargestellt, das unter dem Namen SieFuzy im Handel erhältlich ist. Eingangsgrößen einer Fuzzy-Regelbasis Rulebase 1 sind physikalische Größen mit folgender Bedeutung:

| | |
|---|---|
| V_x | Fahrzeuggeschwindigkeit in Längsrichtung |
| BRAKE | Stellung des Bremspedals |
| FP_ist | Stellung des Fahrpedals |
| iG | Getriebeübersetzung |
| wh_pos | Wählhebelposition |
| a_y | Querbeschleunigung |
| fahrer | den Fahrertyp charakterisierende Größe |
| last | den Lastzustand des Kraftfahrzeugs charakterisierende Größe |
| stwa | Lenkradwinkel |

"Crisp" bedeutet, daß es sich dabei um Zahlenwerte handelt (im Gegensatz zu linguistischen Variablen), FLOAT ist den Datentyp.

Die Regelbasis **Rulebase 1** enthält für die einzelnen Größen folgende Regeln, teilweise in Form einer Erläuterung, teilweise mit vorangestellter Erläuterung:

**Regel 1** (zu der Ist-Fahrpedalstellung):
Je stärker der Fahrer auslenkt, um so größer sollen Radmoment und resultierende Fahrzeugbeschleunigung und -geschwindigkeit sein.
IF V_x IS groesser sehr_klein AND FP_ist IS gross THEN Mrad IS gross

**Regel 2** (zu der Fahrzeuggeschwindigkeit):
Bei sehr langsamer Fahrgeschwindigkeit ist es nützlich, das Radmoment relativ klein zu "dosieren", um beim Rangieren die Fahrbarkeit zu erleichtern.
IF V_x IS sehr_klein AND FP_ist IS gross THEN Mrad IS mittel

**Regel 3** (zu der Fahrsituation/Straßentyp), Beispiel:
Bei glatter Straße ist eine Rücknahme des Soll-Radmoments ebenfalls sinnvoll. Wird Stop und Go erkannt, gilt dies ebenso (Verbesserung der Fahrbarkeit, "Schwächeres Ansprechen" des Antriebs). Andererseits kann gewünscht sein, bei Bergauffahrt oder erhöhter Beladung einer bestimmten Fahrpedalstellung größeres Soll-Radmoment zuzuordnen, um den Fahreindruck oder die Reaktivität des Fahrzeugs in Form von Beschleunigung zu erhalten.
IF last IS gross then Mrad IS plus_mittel

**Regel 4** (zu dem Gang, d.h. der Getriebeübersetzung):
Es kann sinnvoll sein, bei höheren Gängen das Soll-Radmoment etwas abzusenken, auch wenn dies der Grundidee einer vom Getriebegang unabhängigen Einstellung des Drehmoments am Rad 13 widerspricht. Es ist nämlich nicht auszuschließen, daß manchen Fahrer eine selbsttätige Motordrehmomenterhöhung nach einer Hochschaltung stört. Zum anderen existieren Getriebetypen, bei denen eine derartige Drehmomenterhöhung nach dem Hochschalten eher störend in Erscheinung tritt (ASG: Automatisiertes Handschaltgetriebe: Zugkraftunterbrechung).
IF gang IS gross THEN Mrad IS minus_mittel

**Regel 5** (zu der Wählhebelposition):
In Stellung "R" für Rückwärtsgang ist es sinnvoll, die Reaktivität zu reduzieren, ebenso in N oder P (nicht kraftschlüssiger Betrieb).
IF wh_pos IS (N or P or R) then Mrad IS minus_gross

**Regel 6** (zu der Antriebsart):
Ist ein Hybridantrieb vorgesehen, so kann es nützlich sein, bei schwächerer Antriebsquelle (z.B. Elektromotor) die Empfindlichkeit zu erniedrigen, um die Dosierbarkeit zu erhöhen. D.h. bei gleicher Fahrpedalstellung tritt weniger Radmoment in Erscheinung. Mit dieser Regel soll eine andere Skalierung erreicht werden in dem Sinne,daß bei durchgetretenem Fahrpedal das maximale Radmoment verkleinert wird.

IF Mmot,max(t) IS klein then Mrad IS minus_mittel

**Regel 7** (zu dem Fahrstil):

Es ist denkbar, daß ein sportlicher Fahrer eine höhere Reaktivität wünscht.

**Regel 8** (zu einem Zustandswechsel im Antrieb/Getriebe):

Erfolgt ein Wechsel der Wählhebelstellung in den kraftschlüssigen Betrieb, so ist es nützlich und der Sicherheit förderlich, das Radmoment nahe 0 zu halten, falls die Bremse nicht gedrückt ist.
IF ((wh_pos IS nach_kraftschluss) AND (bremse IS nicht_gedrückt)) THEN Mrad IS sehr_klein

**Regel 9** ( zu der Querbeschleunigung):

Bei extremen Fahrmanövern ist es nützlich (an der Stabilitätsgrenze), ebenfalls die Reaktivität zu verringern.
IF aquer_abs IS sehr_gross THEN Mrad IS minus mittel

In Figur 3, die eine einfache Realisierung der Weiterverarbeitung des Momentenwunsches in einer erfindungsgemäßen integrierten Antriesbsstrangregelung darstellt, sind die Schaltungsblöcke 6, 9, 11 und 12 aus Figur 1 detaillierter dargestellt. Die Radmomentberechnung 12 - auch als Driver-Demand bezeichnet - enthält einen Schaltungsblock 26, der das maximale Abtriebsmoment bei Empfang eines Kick-Down-Signals berechnet. Die Auswertung des Kick-Down-Signals erfolgt gesondert, da die Freisetzung des maximalen Motormoments sicherheitskritisch ist. ein Fuzzy-System 27, das sie beschriebene Regelbasis enthält und die aus der Zeichnung ersichtlichen Eingangssignale empfängt, eine noch zu erläuternde Skalierungs-Schaltung 28 und einen Maximumbildner, der das größere der Ausgangssignale des Blocks 26 oder der Skalierung 28 an die Steuerschaltung 6 weiterleitet. Die Skalierung 28 empfängt auch Signale, die sie über das maximale Motormoment und die aktuelle Getriebeübersetzung informieren.

Der Schlupfberechnung oder Traktionsteuerschaltung (TCR) 11 werden die Raddrehzahlsignale zugeführt. In einem Block 30 wird der Schlupf der einzelnen Räder 13 berechnet und daraufhin in einem Block 31 das Radmoment festgelegt. Dessen Ausgangssignal wird ebenfalls an die Steuerschaltung 6 weiterleitet. Diese enthält einen Maximum-Minimum-Bildner, der die Signale der Blöcke 29 und 31 und außerdem Aktivierungssignale einer Motorschlupfregelung MSR und einer Antriebsschlupfregelung ASR empfängt. Je nachdem, ob der Zustand MSR oder ASR aktiv ist, wird das größere oder das kleinere der genannten Signale an die elektronische Motorsteuerung 9 weitergeleitet.

Durch die Abbildung der physikalischen Größen auf die linguistische Werte (Fuzzyfizierung), durch die Abarbeitung der Regelbasis (Inferenzbildung) und die Zuweisung der linguistischen Ergebnisses auf einen physikalischen Wert kann unter besonderen Umständen der physikalische Bezug zwischen den Eingangs- und Ausgangsgrößen der Fuzzy-Regelbasis verloren gehen (zum Beispiel: Welche Drosselklappenposition entspricht welchem Fahrerwunschmoment?). Deshalb wird das Ausgangssignals des Fuzzy-Systems 27 in der Skalierungs-Schaltung 28 skaliert.

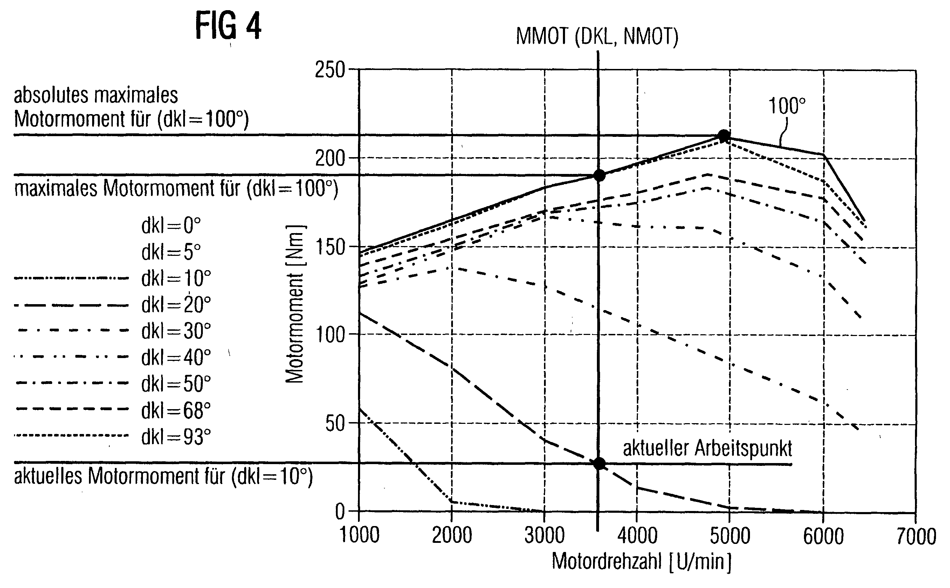

Bei der Skalierung des Fuzzy-Ausgangssignals bezogen auf den Fahrermomentenwunsch sind verschiedene Realisierungen möglich (Figur 4).Von der Wahl des Skalierungsfaktors ist das maximale Motormoment abhängig, das der Fahrer bekommt und der Leerweg, den der Fahrer bei höheren Pedalwerten zurücklegt, ohne daß er mehr Motormoment bekommt, da für den aktuellen Arbeitspunkt das maximale Motormoment freigesetzt ist, das jedoch kleiner als ist. Für die Validierung eines derartigen Regelungskonzeptes werden die Ergebnisse aus der Fahrzeugsimulation verwendet. Mit dem Simulationsfahrzeugmodell wird ein sogenannter Highway-Zyklus durchfahren. Die Ergebnisse der hier durchgeführten Skalierung sind in Figur 4 als Diagramm dargestellt. Auf der Abszisse ist die Motordrehzahl und auf der Ordinate das Motormoment $M_{mot}$ aufgetragen. Dessen Abhängigkeit von der Drosselklappenstellung DKL ist durch Kurven für die verschiedenen DKL-Winkel berücksichtigt. Das aktuelle Motormoment, zum Beispiel bei einem DKL-Winkel von 10°, das maximale Motormoment und das absolute maximale Motormoment, für DKL = 100°, können unmittelbar dem Diagramm entnommen werden.

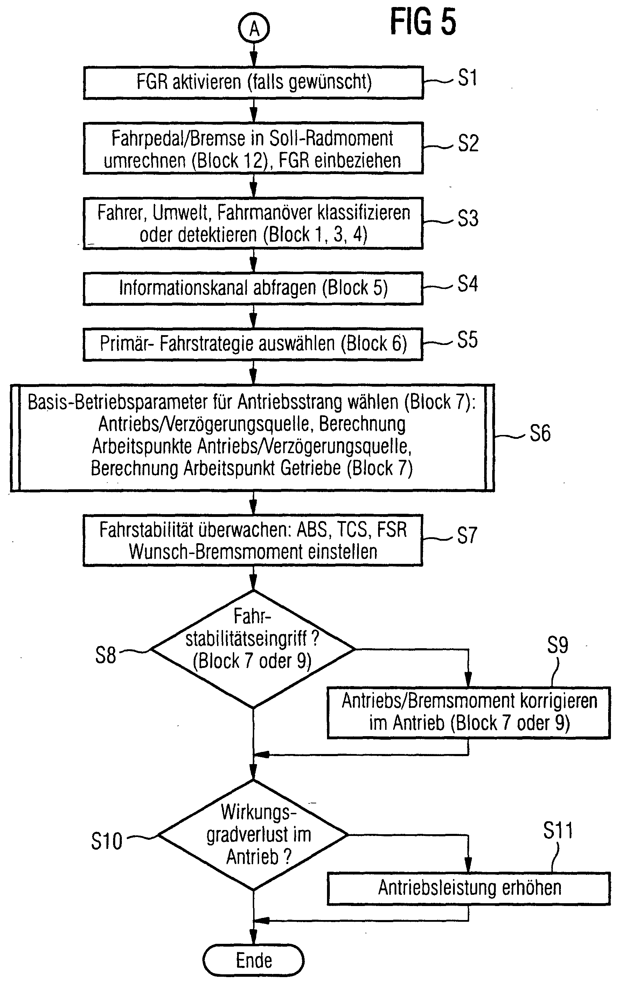

Aus de Figur 5 ist ein Ablaufdiagramm ersichtlich, das von der erfindungsgemäßen Antriebsstrangsteuerung 1 abgearbeitet wird. Nach dem Beginn A führt das Programm folgende Schritte S1 bis S11 durch:

**S1:** Es wird, falls gewünscht, die Fahrgeschwindigkeitsregelung FGR aktiviert.

**S2:** Es wird die Information über das Fahrpedal - oder das Bremspedal in ein Soll-Radmoment umgerechnet (Block 12). Die Fahrgeschwindigkeitsregelung wird ggf. mit einbezogen. (Die vorstehend anhand der Figuren 1 bis 4 erläuterten umfangreichen Vorgänge sind hier zwecks besserer Übersichtlichkeit des Ablaufdiagramms durch den Schritt S2 symbolisiert).

**S3:** Es wird der Fahrer, die Umwelt und die Fahrmanöver klassifiziert oder erfaßt (in den Blöcken 1, 3 und 4).

**S4:** Es wird der Informationskanal 5 abgefragt (in Block 6).

**S5:** Es wird in Block 6 eine Primär-Fahrstrategie ausgewählt.

**S6:** Es werden die Basis-Betriebsparameter für den Antriebsstrang gewählt (in Block 7): die Antriebs- oder Verzögerungsquelle, die Berechnung der Arbeitspunkte der Antriebs- und der Verzögerungsquellen, die Berechnung des Arbeitspunkts des Getriebes (in Block 7).

**S7:** Es wird die Fahrstabilität überwacht: Mit ABS, Motorleistungsstelleinheit TCS und Fahrstabilitätsregelung FSR. Es wird das Wunsch-Bremsmoment eingestellt.

**S8**: Es wird abgefragt, ob ein Fahrstabilitätseingriff erfolgen soll (in Block 7 oder 9). Falls ja wird in

**S9**: das Antriebs- oder Bremsmoment im Antrieb korrigiert (Block 7 oder 9). Falls nein, wird in einem Schritt

**S10:** abgefragt, ob ein Wirkungsgradverlust im Antrieb vorliegt. Falls ja, wird in einem Schritt

**S11:** die Antriebsleistung erhöht. Danach und auch falls nein, gelangt das Programm zu seinem

**Ende.**

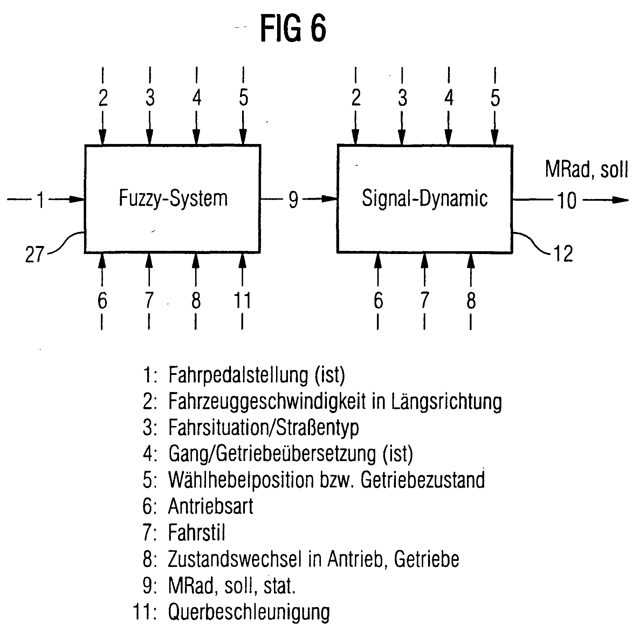

Ein anderes Ausführungsbeispiel von Block 12 wird nun anhand von Figur 6 im einzelnen erläutert, wobei die daraus ersichtliche Signaldynamik von großer Bedeutung ist. Die Si gnalleitungen sind mit Ziffern -1- bis -10- bezeichnet, die nur in dieser Figur benutzt werden. Welche Signale auf diesen Signalleitungen übertragen werden, ist unterhalb der Figur angegeben. Block 12 führt eine dynamische Beeinflussung des auf einer Leitung -9-von dem Fuzzy-System 27 empfangenen Signals durch. Es ist nicht nur entscheidend, welche Größen das Soll-Radmoment Mrad_soll beeinflussen, sondern auch wie schnell der Radmomentaufbau oder -abbau geschieht. Dabei können konventionelle Filter (zum Beispiel 1.Ordnung) eingesetzt werden, deren Zeitkonstanten durch die äußeren Einflußgrößen festgelegt werden und somit die Signaldynamik auf Leitung 10 beeinflussen. Auch ist es vorteilhaft, das Soll-Radmoment bei bestimmten Vorgängen konstant zu halten oder gemäß einer vorgegebenen zeitabhängigen Funktion an einen aktuellen Wert aus Block 5 anzunähern (auch nach einer Phase des Konstanthaltens, zum Beispiel bei einem Gangwechsel). Damit wird der Eindruck vermieden, daß das Fahrzeug selbständig, d.h. ohne Zutun des Fahrers, beschleunigt.

Mehrere Beispiele A. bis für die Arbeitsweise von Block 12 werden nun erläutert:

A: (Einflußgröße Straßentyp): Bei Glätte erfolgt ein stark verzögerter Aufbau des Radmoments.

B. (Einflußgröße Fahrstil): bei einem sportlichen Fahrer erfolgt ein sehr schneller Aufbau des Radmoments.

C. (Einflußgröße Zustandswechsel): bei Schaltvorgängen in einem Getriebe mit Zugkraftunterbrechung wird das Radmoment verzögert aufgebaut (nach der Schaltung erfolgt eine Annäherung an die aktuelle Vorgabe aus dem Fuzzy-System 27), um die Gangwechsel komfortabler zu gestalten oder aber das Radmoment wird für die Dauer der Schaltung "eingefroren". Bei Schaltungen im kraftschlüssigen Betrieb wird das Radmoment verzögert aufgebaut, um den Komfort und die Sicherheit zu verbessern (zum Beispiel zur Vermeidung von Rukkeln).

D. (Einflußgröße Querbeschleunigung): es erfolgt ein verzögerter Aufbau des Radmoments.

E. Eine andere Möglichkeit zum Absenken des Soll-Radmoments Mrad_soll nach einer Hochschaltung zur Vermeidung von Leerweg ist, das auf der Leitung -9- übertragene Signal des Soll-Radmoments im stationären Zustand Mrad_soll,stat mit der Getriebeübersetzung iG zu multiplizieren, d.h. einen (nicht dargestellten) Multiplikator zwischen den Blöcken 27 und 12 anzuordnen. Damit wird das Soll-Radmoment mit zunehmender Gangstufe bei gleicher Fahrpedalstellung verkleinert.

Zusammenfassend sei nun die Erfindung wie folgt charakterisiert: Durch die Antriebsstrangsteuerung 1 (Figur1) wird die als vom Fahrer gewünschtes Radmoment oder Getriebeausgangsmoment interpretierte Stellung des Fahrpedals zum Berechnen von Sollwerten für das von dem Antriebsstrang abzugebende Drehmoment verwendet. Die Antriebsstrangsteuerung 1 enthält eine Auswahl- und Steuerschaltung 6, in der das gewünschte Radmoment zusammen mit weiteren Betriebsparametern des Kraftfahrzeugs in einem Fuzzy-System 27 ausgewertet werden. Sie gibt ein Ausgangssignal $M_{rad\_soll}$ ab, durch welches das von den Rädern auf die Fahrbahn abzugebende Raddrehmoment festgelegt wird.

**Patentansprüche**

1. Antriebsstrangsteuerung (1) für ein Kraftfahrzeug,

    - die eine Radmomentberechnungsschaltung (12) enthält, durch die die Stellung des Fahrpedals (21) als ein vom Fahrer gewünschtes Radmoment oder Getriebeausgangsmoment interpretiert und zum Berechnen von Sollwerten für das von dem Antriebsstrang (24) abzugebende Drehmoment verwendet wird, und

- die eine Steuerschaltung (6, 7) aufweist,

  -- die mit einem Fuzzy-System (27) versehen ist, in der das gewünschte Radmoment zusammen mit Betriebsparametern des Kraftfahrzeugs und Umweltparametem ausgewertet wird;
  -- durch die anhand einer zentralen Fahrstrategieauswahlschaltung (6) die Betriebsweise des Antriebsstrangs (24) bei beliebiger Fahrweise des Fahrers und Fahrsituation des Kraftfahrzeugs an vorgebbare Kriterien angepaßt wird, und
  -- die mit einer Motorleistungsstelleinheit (9) verbunden ist, an die sie ein Ausgangssignal ($M_{rad\_soll}$) abgibt, durch welches das von den Rädern auf die Fahrbahn abzugebende Soll-Raddrehmoment festgelegt wird.

2. Antriebsstrangsteuerung nach Anspruch 1, dadurch gekennzeichnet, daß das Raddrehmoment ($M_{rad\_soll}$) radselektiv für die einzelnen Räder des Kraftfahrzeugs festgelegt wird.

3. Antriebsstrangsteuerung nach einem der vorhergehenden Ansprüche, dadurch gekennzeichnet, daß das Ausgangssignal des Fuzzy-Systems (27) in einer Skalierungs-Schaltung (28) derart skaliert wird, daß für das jeweils maximal abzugebende Raddrehmoment in Abhängigkeit von der Fahr- und Betriebssituation des Kraftfahrzeugs eine obere Schranke festgelegt wird, die der mechanisch maximalen Fahrpedalstellung (ohne Kick-down) entspricht.

4. Antriebsstrangsteuerung nach einem der vorhergehenden Ansprüche, dadurch gekennzeichnet, daß das skalierte Ausgangssignal des Fuzzy-Systems (27) gefiltert wird, wobei Filtertyp und Filterparameter abhängig von der Fahr- und Betriebssituation festgelegt werden.

5. Antriebsstrangsteuerung nach einem der vorhergehenden Ansprüche, dadurch gekennzeichnet, daß die Radmomentberechnungsschaltung (12) die Stellungen des Fahrpedals (21) und des Bremspedals (20) empfangen und daraus zentrale Steuerparameter für Antriebsquellen (9) und verzögernde Einheiten (11) des Antriebsstrangs erzeugt werden.

6. Antriebsstrangsteuerung nach einem der vorhergehenden Ansprüche, dadurch gekennzeichnet, daß sie eine Klassifikationseinrichtung (1.02) aufweist, durch die Sensorsignale (S) aus dem Antriebsstrang ausgewertet und Betriebsparameter des Kraftfahrzeugs klassifiziert werden.

7. Antriebsstrangsteuerung nach Anspruch 6, dadurch gekennzeichnet,

   - daß in der Fahrstrategieauswahlschaltung (6) anhand von Ausgangssignalen der Klassifikationsschaltung (1.02) die Fahrstrategie ausgewählt wird, und

   - daß sie dezentrale Steuerungseinheiten (8 bis 11) aufweist, in denen Ausgangssignale der Radmomentberechnungsschaltung (12) und der Fahrstrategieauswahlschaltung (6) empfangen und Steuersignale für den Motor, das Getriebe und ggf. die Bremsanlage des Kraftfahrzeugs erzeugt werden.

8. Antriebsstrangsteuerung nach Anspruch 7, dadurch gekennzeichnet, daß bei gegebenem Soll-Raddrehmoment ($M_{rad\_soll}$) die Betriebspunkte des Motors, des Getriebes, der Bremsanlage des Kraftfahrzeugs und eines ggf. vorhandenen Drehmomentwandlers derart gesteuert werden, daß sie folgende Beziehung erfüllen:

$$M_{rad\_soll} = M_{mot\_soll} *i_A *i_G *wv\text{-}F_{Brems} *r$$

worin:

   $M_{rad\_soll}$ das Soll-Radmoment
   $M_{mot\_soll}$ das Soll-Motormoment
   $i_A$ die Differentialübersetzung
   $i_G$ die Getriebeübersetzung
   $r$ der Radradius
   $wv$ die Verstärkung des Drehmomentwandlers
   $F_{brems}$ die einzustellende Bremskraft

sind.

9. Antriebsstrangsteuerung nach einem der vorhergehenden Ansprüche, dadurch gekennzeichnet, daß das Sollradmoment ($M_{rad\_soll}$) bei einem bei Gangwechsel konstant gehalten oder gemäß einer vorgegebenen Zeitfunktion auf einen aktuellen, von dem Fuzzy-System (27) gelieferten Wert herangeführt wird, insbesondere nach einer Phase des Konstanthaltens.

10. Verwendung einer Antriebsstrangsteuerung nach einem der vorhergehenden Ansprüche in einem Kraftfahrzeug mit einem Hybridantrieb, dadurch gekennzeichnet, daß durch sie die Art der Antriebsquelle festgelegt wird.

## Claims

1. Drive train controller (1) for a motor vehicle,

   - which contains a wheel torque calculation circuit (12) by means of which the position of the accelerator pedal (21) is interrupted as a wheel torque or transmission output torque desired by the driver and is used to calculate setpoint values for the torque to be output by the drive train (24), and
   - which has a control circuit (6, 7),

     -- which is provided with a fuzzy system (27) in which the desired wheel torque is evaluated together with operating parameters of the motor vehicle and environmental parameters;
     -- by means of which, given any desired mode of operation of the driver and driving situation of the motor vehicle, the mode of operation of the drive train (24) is adapted to prescribable criteria with reference to a central driving strategy selector circuit (6), and
     -- which is connected to an engine power adjusting unit (9) to which it outputs an output signal ($M_{wheel-setp}$) by means of which the setpoint wheel torque to be exerted on the roadway by the wheels is defined.

2. Drive train controller according to Claim 1, characterized in that the wheel torque ($M_{wheel-setp}$) is defined on a wheel-specific basis for the individual wheels of the motor vehicle.

3. Drive train controller according to one of the preceding claims, characterized in that the output signal of the fuzzy system (27) is scaled in a scaling circuit (28) in such a way that an upper limit, which corresponds to the mechanically maximum accelerator pedal position (without kick-down) is defined for the respective maximum wheel torque to be output, as a function of the driving and operating situation of the motor vehicle.

4. Drive train controller according to one of the preceding claims, characterized in that the scaled output signal of the fuzzy system (27) is filtered, the filter type and filter parameter being defined as a function of the driving and operating situation.

5. Drive train controller according to one of the preceding claims, characterized in that, by means of the wheel torque calculation circuit (12), the positions of the accelerator pedal (21) and of the brake pedal (20) are received and central control parameters for drive sources (9) and delaying units (11) of the drive train are generated therefrom.

6. Drive train controller according to one of the preceding claims, characterized in that it has a classification device (1.02) by means of which sensor signals (S) from the drive train are evaluated and operating parameters of the motor vehicle are classified.

7. Drive train controller according to Claim 6, characterized

   - in that the driving strategy is selected in the driving strategy selector circuit (6) with reference to output signals of the classification circuit (1.02), and
   - in that it has decentralized control units (8 to 11) in which output signals of the wheel torque calculation circuit (12) and of the driving strategy selector circuit (6) are received and control signals for the engine, the transmission and, if appropriate, the brake system of the motor vehicle are generated.

8. Drive train controller according to Claim 7, characterized in that, at a given setpoint wheel torque ($M_{wheel-setp}$) the operating points of the engine, of the transmission, of the brake system of the motor vehicle and of a possibly present torque converter are controlled in such a way that they fulfil the following relation:

$$M_{wheel-setp} = M_{eng-setp} * i_A * i_G * wv - F_{brake} * r$$

   where:

   $M_{wheel-setp}$ is the setpoint wheel torque
   $M_{eng-setp}$ is the setpoint engine torque
   $i_A$ is the differential transmission ratio
   $i_G$ is the gear transmission ratio
   $r$ is the wheel radius
   $wv$ is the amplification factor of the torque converter
   $F_{brake}$ is the braking force to be set.

9. Drive train controller according to one of the preceding claims, characterized in that the setpoint wheel torque ($M_{wheel-setp}$) is kept constant at one value in the event of a gear change or is approximated, in accordance with a prescribed time function, to a current value supplied by the fuzzy system (27), in particular after a phase of being kept constant.

10. Use of a drive train controller according to one of the preceding claims in a motor vehicle having a hybrid drive, characterized in that it defines the type of drive source.

**Revendications**

1. Commande de chaîne cinématique (1) pour un véhicule automobile,

   - qui comprend un circuit (12) de calcul du couple de roue, qui utilise la position de la pédale d'accélérateur, interprétée comme couple de roue ou couple de sortie de la boîte de vitesses souhaité par le conducteur, pour calculer des valeurs de consigne pour le couple qui doit être développé par la chaîne cinématique et
   - qui présente un circuit de commande (6, 7)

     -- qui est muni d'un système de logique floue (27) dans lequel le couple de roue souhaité est analysé conjointement avec des paramètres de fonctionnement du véhicule automobile et avec des paramètres de l'environnement ;
     -- par lequel, au moyen d'un circuit central de sélection de la stratégie de conduite (6), le mode de fonctionnement de la chaîne cinématique (24) est adapté à des critères pouvant être déterminés quel que soit le mode de conduite du conducteur et quelle que soit la situation de conduite du véhicule automobile, et
     -- qui est relié à une unité (9) de réglage de la puissance du moteur à laquelle il transmet un signal de sortie ($M_{rad\_soll}$) qui fixe le couple de roue de consigne qui doit être transmis à la chaussée par les roues.

2. Commande de chaîne cinématique selon la revendication 1, caractérisée en ce que le couple de roue de consigne ($M_{rad\_soll}$) est fixé sélectivement pour chacune des roues du véhicule automobile.

3. Commande de chaîne cinématique selon une des revendications précédentes, caractérisée en ce que le signal de sortie du système de logique floue (27) est mise à l'échelle dans un circuit de mise à l'échelle (28) de telle manière que, pour le couple maximum sur les roues à transmettre, une limite supérieure soit fixée en fonction de la situation de conduite et de fonctionnement du véhicule automobile, limite qui correspond à la position mécaniquement maximale de la pédale d'accélérateur (sans Kickdown).

4. Commande de chaîne cinématique selon une des revendications précédentes, caractérisée en ce que le signal de sortie mis à l'échelle du système de logique floue (27) est filtré, le type du filtre et les paramètres du filtre étant fixés en fonction de la situation de conduite et de fonctionnement.

5. Commande de chaîne cinématique selon une des revendications précédentes, caractérisée en ce que le circuit de calcul du couple de roue (12) qui reçoit les positions de la pédale d'accélérateur (21) et de la pédale de frein (20) et sur leur base, produit des paramètres de commande centraux pour des sources de force motrice (9) et des unités de décélération (11) de la chaîne cinématique.

6. Commande de chaîne cinématique selon une des revendications précédentes, caractérisée en ce qu'elle présente un dispositif de classification (1.02) qui analyse les signaux de capteurs (S) issus de la chaîne cinématique et classe les paramètres de fonctionnement du véhicule automobile.

7. Commande de chaîne cinématique selon la revendication 6, caractérisée

   - en ce que la stratégie de conduite est sélectionnée dans le circuit de sélection de la stratégie de conduite (6) sur la base de signaux de sortie du circuit de classification (1.02), et
   - en ce qu'elle présente des unités de commande non centrales (8 à 11) dans lesquelles des signaux de sortie du circuit de calcul de couple de roue (12) et du circuit de sélection de la stratégie de conduite (6) sont reçus et où sont produits des signaux de commande pour le moteur, la bo et éventuellement l'installation de freinage du véhicule automobile.

8. Commande de chaîne cinématique selon la revendication 7, caractérisée en ce que, pour un couple de roue de consigne donné ($M_{rad\_soll}$), les points de travail du moteur, de la boîte de vitesses, de l'installation de freinage du véhicule automobile et d'un convertisseur de couple éventuellement présent sont commandés de manière à respecter la relation suivante :

$$M_{rad\_soll} = M_{mot\_soll}*iA*iG*wv6F_{brems}*r$$

où

$M_{rad\_soll}$ désigne le couple de roue de consigne
$M_{mot\_soll}$ désigne le couple de consigne du moteur
$i_A$ désigne la démultiplication du différentiel
$i_G$ désigne le rapport de boîte de vitesses
$r$ désigne le rayon des roues
wv désigne l'amplification du convertisseur de couple
$F_{brems}$ désigne la force de freinage à établir.

**9.** Commande de chaîne cinématique selon une des revendications précédentes, caractérisée en ce qu'en réponse à un changement de rapport, le couple de roue de consigne ($M_{rad\_soll}$) est maintenu constant, ou porté, en suivant une fonction du temps prédéterminée, à une valeur actuelle, fournie par le système de logique floue (27), en particulier après une phase de maintien à un niveau constant.

**10.** Utilisation d'une commande de chaîne cinématique selon une des revendications précédentes, dans un véhicule à entraînement hybride, caractérisée en ce qu'elle fixe le mode de la source de force d'entraînement.

**1.02**

EP 0 883 510 B1

Zentrale
Klassifikation
und
Kriterienbildung

Fahrertyp-,
Wunsch-
gewinnung

Umwelt/
Straßentyp
Lokalisation (GPS)

Fahrmanöver,
Fahrsituation

Informationskanal
(Funktelefon, Satellit)

FRG

Primär-Fahrstrategieauswahl

Radmomentberechnung

Basis- Betriebsparametergewinnung

Fahrerinfo

dezentrale
Steuerungseinheiten 13

EPAS

EMS/
ETC

EGS

ABS- TCS- FSR

**FIG 1**

FIG 2

SieFuzzy-(TQ.FPL)

File  Edit  Utilities  Debug  Simulate  Online  Project  Window  Help

Name
driver_torque

driver_torque_request

V_x
Crisp FLOAT

BRAKE
Crisp FLOAT

FP_ist
Crisp FLOAT

ig
Crisp FLOAT

wh_pos
Crisp FLOAT

a_y
Crisp FLOAT

Rulebase 1

fahrer
Crisp FLOAT

last
Crisp FLOAT

Mrad
Crisp FLOAT

EP 0 883 510 B1

## FIG 3

Radmomentberechnung

maximales Antriebsmoment

Kick-Down

vom Fahrer gewünschtes Antriebsmoment

Fahr-Pedalwert
Brems-Pedalwert
Geschwindigkeit

Fuzzy-System

Skalierung

MAX

maximales Motormoment
aktuelle Getriebeübersetzung

Meta-Controller

Motorsteuerung

MIN MAX

TCS

Raddrehzahlen

Schlupf-berechnung

Momenten-Kontrolle

MSR ASR

EP 0 883 510 B1

FIG 4

MMOT (DKL, NMOT)

absolutes maximales
Motormoment für (dkl=100°)

maximales Motormoment für (dkl=100°)

dkl=0°
dkl=5°
‒‒‒·‒‒‒·‒ dkl=10°
‒·‒‒‒·‒‒ dkl=20°
‒·‒‒‒·‒ dkl=30°
‒·‒··‒··‒ dkl=40°
‒·‒··‒··‒ dkl=50°
‒‒‒‒‒‒ dkl=68°
·············· dkl=93°

aktuelles Motormoment für (dkl=10°)

100°

aktueller Arbeitspunkt

Motormoment [Nm]

250

200

150

100

50

0

Motordrehzahl [U/min]

1000  2000  3000  4000  5000  6000  7000

EP 0 883 510 B1

EP 0 883 510 B1

# FIG 5

(A)

FGR aktivieren (falls gewünscht) —— S1

Fahrpedal/Bremse in Soll-Radmoment umrechnen (Block 12), FGR einbeziehen —— S2

Fahrer, Umwelt, Fahrmanöver klassifizieren oder detektieren (Block 1, 3, 4) —— S3

Informationskanal abfragen (Block 5) —— S4

Primär- Fahrstrategie auswählen (Block 6) —— S5

Basis-Betriebsparameter für Antriebsstrang wählen (Block 7): Antriebs/Verzögerungsquelle, Berechnung Arbeitspunkte Antriebs/Verzögerungsquelle, Berechnung Arbeitspunkt Getriebe (Block 7) —— S6

Fahrstabilität überwachen: ABS, TCS, FSR Wunsch-Bremsmoment einstellen —— S7

S8 —— Fahr- stabilitätseingriff ? (Block 7 oder 9)

S9 —— Antriebs/Bremsmoment korrigieren im Antrieb (Block 7 oder 9)

S10 —— Wirkungs- gradverlust im Antrieb ?

S11 —— Antriebsleistung erhöhen

Ende

17

# FIG 6

1: Fahrpedalstellung (ist)

2: Fahrzeuggeschwindigkeit in Längsrichtung

3: Fahrsituation/Straßentyp

4: Gang/Getriebeübersetzung (ist)

5: Wählhebelposition bzw. Getriebezustand

6: Antriebsart

7: Fahrstil

8: Zustandswechsel in Antrieb, Getriebe

9: MRad, soll, stat.

11: Querbeschleunigung